# EUROPÄISCHE PATENTSCHRIFT

(11) **EP 1 554 228 B1**
(45) Veröffentlichungstag und Bekanntmachung des Hinweises auf die Patenterteilung: **05.10.2011**
(21) Anmeldenummer: 02808045.5
(22) Anmeldetag: 28.10.2002
(51) Int. Cl.: C04B 28/02, C04B 18/24, C04B 22/10

(54) **Baustoff auf pflanzlicher Basis und Verfahren zur Herstellung dieses Baustoffes.**
Construction material on a plant basis and method for the producing of this construction material.
Matériau de construction à base végétale et procédé de fabrication de ce matériau de construction.

(43) Veröffentlichungstag der Anmeldung: 20.07.2005
(73) Patentinhaber: nawaRo AG, 3212 Gurmels (CH)
(72) Erfinder: FREUDIGER, Martin, CH-2076 Gals (CH)
(74) Vertreter: AMMANN PATENTANWÄLTE AG BERN
(86) Internationale Anmeldenummer: PCT/CH2002/000583
(87) Internationale Veröffentlichungsnummer: WO 2004/037742

(56) Entgegenhaltungen:
- EP-A- 0 016 727
- EP-A- 0 735 162
- WO-A-01/38661
- WO-A-02/06182
- WO-A-97/09492
- CH-A- 688 721
- DE-A- 2 135 877
- DE-A- 3 632 394
- DE-A- 10 050 134
- DE-A- 19 526 541
- DE-A- 19 704 198
- DE-A- 19 914 280
- DE-C- 884 088
- GB-A- 557 777
- GB-A- 2 349 665
- US-A1- 2002 059 886
- DATABASE WPI Section Ch, Week 197914 Derwent Publications Ltd., London, GB; Class A93, AN 1979-26688B XP002242677 & JP 54 025925 A (NIPPON HARD BOARD K), 27. Februar 1979 (1979-02-27)

## Beschreibung

Die Erfindung betrifft einen Baustoff auf pflanzlicher Basis gemäss Oberbegriff des Anspruches 1. Die Erfindung betrifft ebenfalls ein Verfahren zur Herstellung dieses Baustoffes und die aus letzterem hergestellten Bauelemente und Gegenstände.

Baustoffe aus nachwachsenden Rohstoffen werden vielfach entwickelt und eingesetzt, um dem Bedürfnis nach einer im Einklang mit der Natur stehenden ökologischen Bauweise gerecht zu werden. Im Stand der Technik sind vielfältige Kombinationen auf der Grundlage pflanzlicher Rohstoffe bekannt.

Sehr häufig wurden Stroh und Lehm als historische ökologische Baustoffe eingesetzt. Jedoch verringern die begrenzte Stabilität und Beständigkeit dieser Materialkombination deren Einsatz. So genügen die mit Stroh und Lehm gebauten Fachwerkausfachungen den heutigen modernen Anforderungen an den Wärme- und Schallschutz nicht.

Weiterhin wurden vielfältige Versuche unternommen, mit Holz als pflanzlichem Rohstoff in der Kombination mit Zement nachhaltig zu bauen. Jedoch ist die geringe Festigkeit bzw. Oberflächenfestigkeit bei einer zu hohen Dichte und damit dem relativ hohen Gewicht der daraus hergestellten Bauelemente, oft hinderlich. Zudem sind die Schall- und Wärmedämmeigenschaften durch den erforderlichen hohen Anteil an Zement als Bindemittel relativ schlecht.

Auf der Suche nach einem Baustoff mit möglichst hohem Anteil an nachwachsenden Rohstoffen und guten chemischen, physikalischen und mechanischen Eigenschaften wurden weiterhin Versuche mit Miscanthus (Chinaschilf) unternommen. Diese Pflanzengattung besitzt auch durch ihren hohen Siliziumanteil ideale Voraussetzungen zur Verarbeitung zu einem stabilen und dauerhaften Baustoff.

Jedoch ist die Herstellung eines brauchbaren Baustoffes auf Basis eines pflanzlichen Zuschlags nur dann möglich, wenn letzterer in die Bindemittelmatrix einbindet. Diese Bedingung wird durch eine Mineralisation der pflanzlichen Rohstoffe erfüllt. Folglich ist eine qualitative Nutzbarmachung von nachwachsenden pflanzlichen Rohstoffen für ein modernes und zeitgemässes Bauen insbesondere von der Güte und Effizienz dieser Mineralisation abhängig.

Ferner wird bekanntlich bei Bauten von verschiedenen Bauelementen und -gegenständen Gebrauch gemacht, die jeweils je nach Einsatzbestimmungen spezifische Eigenschaften aufweisen müssen. So findet man neben denjenigen für die Errichtung z. B. von Mauern und Wänden weitere Elemente wie vorgefertigte Gipsplatten.

Es stellt sich somit das Problem, einen Universalbaustoff auf pflanzlicher Basis herzustellen. Das heisst, dass dieser Baustoff dank einer in Anbetracht der vorgesehenen Anwendung und somit der zu erfüllenden Eigenschaften anpassbaren, gegebenenfalls durch spezifische, ebenfalls anwendungsorientierte Zusätze erweiterbaren Grundzusammensetzung für quasi alle denkbaren Anwendungen eingesetzt werden kann.

Nach der Lehre von EP-1,108,696 A1 wird eine Vormineralisation von nachwachsenden faserigen Rohstoffteilchen wie Holz-, Hanf,- und/oder Schilfrohrteilchen durch Zement, vorzugsweise Portlandzement, als Mineralisator durchgeführt. Die Vormineralisation der pflanzlichen Rohstoffe erfolgt dabei in einem separaten Arbeitsgang, wonach die mit Mineralisationsflüssigkeit behandelten Rohstoffe getrocknet werden. Anschliessend ist ein Einsatz der vorbehandelten Pflanzteile zur Herstellung von Beton oder Mörteln möglich. Aus dieser Vorgehensweise ergibt sich der Nachteil, dass eine zusätzliche Behandlung der pflanzlichen Rohstoffe zum Zwecke der Vormineralisierung notwendig ist. Ein zusätzlicher Arbeitsgang ist auch mit zusätzlichen Kosten verbunden, und die Bauwirtschaft ist aufgrund eines anhaltend hohen Kostendruckes bestrebt, zusätzliche Verfahrensschritte einzusparen. Denn eine Erhöhung der Kosten für ein ökologisch nachhaltiges Bauen vermindert stark die Attraktivität einer solchen Bauweise und kann nicht zur alternativen Anwendung dieser Baustoffe auf pflanzlicher Basis im Verhältnis zu den konventionellen Baustoffen führen.

In WO-A-02/12145 wird deswegen auf eine Vormineralisation des pflanzlichen Zuschlags verzichtet mit dem Ziel, Beton und Mörtel auf Basis dieses Zuschlages einfacher und billiger zu gestalten und doch gute Eigenschaften betreffend Wärmedämmung, Schallisolierung, Biege- und Druckfähigkeit zu enthalten. Dieses Ziel dürfte jedoch im Hinblick insbesondere auf dem gewählten Mineralisator nicht optimal erreicht werden. Ferner ist von einer Anpassung des Baustoffes im Hinblick auf verschiedene zu erfüllende Eigenschaften keine Rede, so dass die Anwendungsgebiete relativ beschränkt sein dürften.

Es ist eine Aufgabe der vorliegenden Erfindung, das oben geschilderte Problem und im Stand der Technik enthaltene Nachteile zu lösen bzw. zu überwinden.

Diese Aufgabe wird erfindungsgemäss durch den in Anspruch 1 definierten Baustoff gelöst, wobei die abhängigen Ansprüche bevorzugte Zusammensetzungen und Merkmale angeben.

Die nach dem erfindungsgemässen Verfahren hergestellten erfindungsgemässen Baustoffe weisen insbesondere im Vergleich zu den bekannten Baustoffen derselben Gattung eine wesentliche bessere Klebefähigkeit und angepasste mechanische Eigenschaften aus. Ferner sind sie preiswert und ökologisch, wegen der Anwendung nachwachsender Rohstoff und der Einsparungen von Arbeitsgängen - wobei die Fabrikationsanlagen sehr viel einfacher und kostengünstiger gestaltet werden können und gleichsam eine kontinuierliche Fertigung des erfindungsgemässen Baustoffes vorgesehen werden kann, da eine Zwischenlagerung oder gar eine zwischengeschaltete Trocknung der mineralisierten pflanzlichen Rohstoffe nicht erforderlich ist - und auf logistischer Ebene. Schliesslich sind die möglichen Anwendungen und Einsatzgebiete der erfindungsgemässen Baustoffe quasi unausschöpfbar.

Weitere Einzelheiten, Merkmale und Vorteile des erfindungsgemässen Verfahrens und der daraus herstellbaren Baustoffe ergeben sich aus der nachfolgenden Beschreibung von Ausführungsbeispielen. Zur Illustration werden Bauelemente mit Bezugnahme auf nachstehende Zeichnungen dargestellt:
Fig. 1 zeigt ein schallabsorbierendes Bauelement,
Fig. 2.1 einen Hangsicherungsstein,
Fig. 2.2 einen Hangsicherungsstein mit Lamellen und
Fig. 3 eine Hangsicherungswand.

Als pflarizliche Rohstoffe werden vorteilhaft Miscanthus (Chinaschilf), Hanfschäben, Hanffasern, Nadelholz, Zuckerrohr, Ströh (z.B. Weizen- oder Roggenstroh), Switchgras (panicum virgatum), italienisches Raigras, Riedschilf einzeln oder in verschiedenen Kombinationen miteinander eingesetzt. Die pflanzlichen Rohstoffe werden vor ihrem Einsatz zerkleinert. Die Zerkleinerung erfolgt je nach Art des Rohstoffes und je nach Art des gewünschten Baustoffes und den daraus zu erzeugenden Bauelementen zu längsförmigen Teilchen bis ca. 40 mm oder zu Granulat bis ca. 8 mm Durchmesser. So liegt zum Beispiel die gewünschte Länge der Fasern bis ca. 40 mm und die Körnung zwischen 0 und 8 mm wenn der Baustoff zur Herstellung von Aussenwänden oder Mauersteinen verwendet wird, während diese Werte vorzüglich zwischen 0 und 2 mm liegen sollen, wenn der Baustoff für den Verputz bestimmt ist.

Zu der gewählten und zerkleinerten pflanzlichen Basis PB von pflanzlichen Rohstoffen wird eine Mischung M1 in einem Arbeitsgang beigemischt. Diese Mischung M1 besteht aus einem Bindemittel, zum Beispiel Portlandzement oder ein Gemisch verschiedener Portlandzemente, vorzugsweise jedoch Portlandzement der Güte PZ 52.5, und aus einem Mineralisator. Der Mineralisator wird im Portlandzementwerk nach Rezeptur, das heisst in vorgegebenen anwendungsorientierten bzw. -abhängigen Proportionen, dem Portlanzement direkt zugemischt. Somit kann danach aus einem einzigen Silo die Mischung M1 herausgenommen und mittels einer Waage gewogen werden, bevor sie in einen Mischer gelangt, in welchem PB und M1 zusammengemischt werden. Im Vergleich zu den herkömmlichen Verfahren [wo der Mischer für die Mischung {PB + M1} mit zwei Silos (der eine den Portlandzement, der andere den Mineralisator enthaltend), jeweils via eine Waage verbunden ist] erzeugt dieses Vorgehen infolge der Vereinfachung der Anlage und der Reduzierung der Arbeitsgänge eine nicht geringfügige Herabsetzung der Herstellungskosten des Baustoffes.

Die Gewichtsanteile der die Mischung M1 bildenden Komponenten liegen in einem Bereich von ca. 50 % bis ca. 90 %, vorzugsweise zwischen 6/10 - 4/5 für das Portlandzement und in einem Bereich von ca. 10 % bis ca. 50 %, vorzugsweise zwischen 1/5 - 4/10 für den Mineralisator.

Der Mineralisator besteht aus einer definierten anwendungsorientierten bzw. -abhängigen Mischung M2 von Kalziumkarbonat CaCO₃ und Magnesiumkarbonat MgCO₃, wobei die Gewichtsanteile in einem Bereich von ca. 60 % bis ca. 95 %, vorzugsweise zwischen 2/3 - 9/10, für da CaCO₃ und in einem Bereich von ca. 5 % und ca. 40 %, vorzugsweise zwischen 1/10 - 1/3, für das MgCO₃ liegen. Die praktischen Anwendungen haben gezeigt, dass der so zusammengesetzte Mineralisator eine im Vergleich zu den bekannten Mineralisatoren wesentliche bessere Klebefähigkeit der pflanzlichen Rohstoffe und damit Einbindung in die Matrix gewährleistet.

Die aus den Mischungen PB und M1 erhaltene Mischung kann nun in eine entsprechend einer gewünschten Konsistenz Kᵢ vorgegebene Anmachwassermenge eingerührt werden (Kᵢ = Steife des frischen Betons; K₁ = nasser als erdfeucht, beim Schütteln lose; K₂ = knapp weich, beim Schütteln schollig; K₃ = weich bis flüssig; Quelle: Lüger).

Dank der oben definierten Zusammensetzung und deren Zusammenspiel ist eine Reihe von Vorteilen registrierbar. Es konnte nämlich beobachtet werden, dass die Erstarrung schon nach sehr kurzer Zeit, nämlich ca. 75 Minuten nach dem Anmachen beginnt und der Abbindeprozess beschleunigt abläuft. Ferner ist im Vergleich zu allen bekannten Baustoffen, inklusive den auf pflanzlicher Basis hergestellten Baustoffen, das Volumengewicht vermindert, die Haufwerksporigkeit höher, die Dampfdiffusion und die Wärmedämmung verbessert und die Eigenschaften bezüglich Druck-, Zug- und Biegefestigkeitswerten - die merklich über den DIN-Vorschriften für Betons und Mörtel liegen - wesentlich erhöht.

Die Mischung {PB + M1} bildet sozusagen eine Universalgrundmischung, die als solche vielfältig und vorteilhaft eingesetzt bzw. angewandt werden kann. Für ein bestimmtes PB-Volumen genügt es, u. U. innerhalb der angegebenen Bereiche lediglich die Proportionen der Mischungskomponenten M1 (= Bindemittel + Mineralisator M2) und/oder M2 (= Kalziumkarbonat + Magnesiumkarbonat) anzupassen. Die Anpassungen können mühelos vom Fachmann im Hinblick auf die Anwendung des Baustoffes, d. h. die zu erfüllenden Eigenschaften des Baustoffes, vorgenommen werden.

Der Universalgrundmischung kann eine weitere Mischung M3 - auf die später im Detail eingegangen wird - zugegeben werden. Bei der erwähnten Anpassung wird selbstverständlich der Fachmann dieser Mischung Rechnung tragen.

Des weiteren wurde festgestellt, dass durch sporadisch auftretende Pilzbildung bei den nachwachsenden Rohstoffen der Erstarrungsbeginn und der darauf folgende Abbindeprozess erheblich verzögert werden kann. Hierbei sind aufgund einer Prüfung an der Humboldt-Universität Berlin folgende Pilze benannt : "Alternia" (Blaufärbung), "Fusarium" (Rotfärbung) und "Penicillium" (Gelbfärbung). Es ist folglich von Vorteil, dass dem Anmachwasser ein Fungizid-Präparat zugesetzt wird, um diese Pilze wirkungslos zu machen. Zum Beispiel kann dies durch Zugabe von 2/3 Liter Natronlauge auf 1'000 Liter Anmachwasser geschehen. Ist in dieser Beschreibung von Anmachwasser die Rede, so ist stillschweigend stets ein auf diese Art angereichertes Wasser gemeint.

Wird der Baustoff beispielsweise für das Errichten von Aussenwänden oder für die Herstellung von Mauersteinen bzw. Betonformsteinen oder Hohlblocksteinen vorgesehen, so kann er vorteilhaft gemäss folgenden Angaben zusammengesetzt werden:
- PB = 1 m³, vorzugsweise Miscanthus (zerkleinert gemäss oben erwähnten Angaben);
- M1 = 300 kg, davon 75 kg Mineralisator gemäss M2 und 225 kg Portlandzement (Gewichtsanteile 25 % zu 75 %);
- M2 = besteht aus 60 kg Kalziumkarbonat und 15 kg Magnesiumkarbonat (Gewichtsanteile 80 % zu 20 %);
- Anmachwasser = ca. 300 1.

Es hat sich erwiesen, dass sich die mit diesem Baustoff hergestellten Produkte durch hervorragende Eigenschaften hinsichtlich Gewicht, Biege- Zug- und Druckfestigkeit, Wärmedämmung und Schallabsorption auszeichnen.

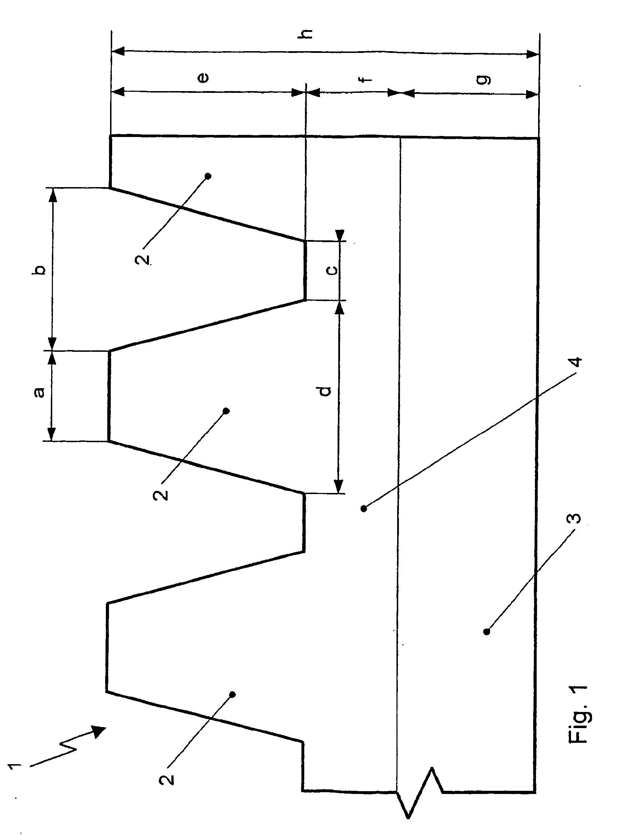

In diesem Zusammenhang werden nun Anwendungen - wie zum Beispiel daraus herstellbare schalldämmende und - absorbierende Bauelemente - als Illustration anhand der Figuren 1 -3 beschrieben.

Für die Verbesserung der Lebensqualität entlang von Autobahnen oder Autostrassen und zur Verminderung der Geräuschbelastung für Anwohner werden schallabsorbierende Bauelemente zu Schallschutzmauern verbunden. Vordergründige Aufgabe dieser Bauwerke ist es, die Schallbelastung für in Richtung der Schallquelle hinter diesen Mauern liegende Bereiche zu mindern. Es ist ein nachvollziehbares Anliegen der betroffenen Kommunen, gerade diese Bauwerke nach ökologischen Gesichtspunkten auszuwählen. Überraschenderweise wurde gefunden, dass gerade die Herstellung von schallabsorbierenden Baulementen nach der technischen Lehre der Erfindung aus überwiegend pflanzlichen Rohstoffen nicht nur den ökologischen Aspekten Rechnung trägt, sondern dass gerade die schallabsorbierenden Eigenschaften des Baustoffes in Kombination mit den geometrischen Verhältnissen des erfindungsgemässen schalldämmenden Bauelementes zu den besseren Ergebnissen gegenüber konventionell für Schallschutzwände eingesetzten Bauelementen führt.

Ein schalldämmendes Bauelement gemäss einer vorteilhaften Ausgestaltung der Erfindung ist in Fig. 1 dargestellt. Als pflanzlicher Rohstoff werden dafür 85 Gewichtsprozent Miscanthus und 15 Gewichtsprozent Nadelholzspäne eingesetzt. Auf einen Kubikmeter pflanzlicher Rohstoffe werden 300 kg des Gemisches M1 eingesetzt, der Baustoff wird anschliessend in eine Form gegossen. Die Materialdichte des entstehenden Bauelements nach dem Abbinden beträgt zwischen 450 und 600 kg/m³, je nach Teilchengrösse und der daraus entstehenden Porigkeit der pflanzlichen Bestandteile.

Das schalldämmende Bauelement weist bevorzugt Lamellen 2 zur Vergrösserung der schallabsorbierenden Fläche auf.

Diese Bauelemente werden beispielsweise mit einer Höhe von 2.90 m und einer Länge von 4.00 m ausgeführt.

Nach einer besonders bevorzugten Ausgestaltung der Erfindung wird das schallabsorbierende Bauelement aus zwei Schichten aufgebaut. Es besteht dann aus einer Tragschicht 3 und einer Absorberschicht 4. Das Bauelement selbst hat eine Dicke h von 25 cm. Die Tragschicht 3 hat mit einer Dichte von 1250 kg/m³ eine tragende Funktion, währenddessen die Absorberschicht 4 mit einer Dichte von 500 kg/m³ vorwiegend Schalldämmungsfunktion aufweist. Dazu besteht die Absorberschicht 4 aus einer Schicht f, an welcher Lamellen 2 trapezförmig angeordnet sind. Die Lamellen 2 weisen eine Höhe e von 10 cm und eine Breite d von 10 cm am Lamellenfuss auf. Sie besitzen eine Breite a von 6 cm am Lamellenkopf und einen Abstand c zwischen den Lamellen am Lamellenfuss von 3 cm. Die Dicke der Schicht f wird nach dem Ausführungsbeispiel mit 4 cm gemessen. Das Gesamtgewicht des Bauelements 1, bezogen auf die projizierte Fläche, beträgt 205 kg/m².

Nach einer weiteren erfindungsgemässen Ausführung eines schalldämmenden Bauelementes wird diese in einer Schicht bzw. aus einem Material ausgebildet. Die Gesamtstärke des Baustoffes Miscanthus-Nadelholz-Hanffaser-Leichtbeton beträgt dabei h = 20 cm. Die Lamellenhöhe e beträgt dabei 8 cm, die Breite der Lamellen 2 am Lamellenkopf a = 4 cm und der Abstand zwischen den Lamellen 2 am Lamellenfuss c = 4 cm.

Bemerkenswert ist, dass die schallabsorbierenden Bauelemente eine sehr gute Tausalzresistenz aufweisen. Dies ist insbesondere für den Einsatz für Schallschutzmauern an Autobahnen wichtig, welche im Winter stark durch tausalzhaltiges Spritzwasser belastet werden.

Die Schallabsorptionseigenschaften wurden nach in der DIN/EN 20 354 standardisierten Verfahren untersucht, und es wurde festgestellt, dass der Schallabsorptionsgrad der erfindungsgemässen schalldämmenden Bauelemente bei einer Frequenz von 250 Hz bis 5000 Hz zwischen 0.71 und 0.88 lag.

Die schallabsorbierende Fläche der Bauelemente lässt sich vorteilhaft durch weitere Segmentierung der Lamellen 2 erhöhen. Die entstehenden pyramidenartigen Ausstülpungen vergrössern die Fläche zur Schallabsorption derart, dass pro Quadratmeter projizierte Fläche der schalldämmenden Bauelemente 1.96 m² schallabsorbierende Fläche entstehen.

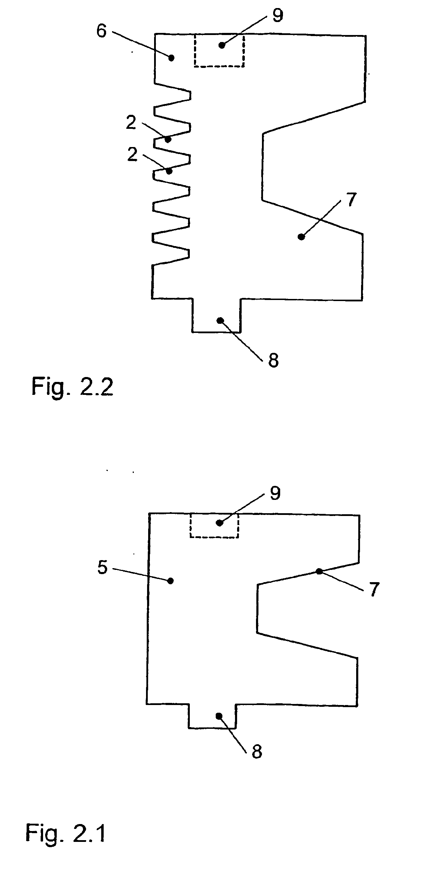

Der Baustoff auf pflanzlicher Basis ist gleichfalls vorteilhaft zu Hangsicherungssteinen 5 verarbeitbar. In Fig. 2.1 ist ein solcher quaderförmiger Hangsicherungsstein 5 zur formschlüssigen Aneinanderfügung mehrerer Hangsicherungssteine 5 dargestellt. Der Hangsicherungsstein 5 weist zur formschlüssigen Aneinanderfügung mehrerer dieser Steine jeweils einen Zapfen 8 und eine Nut 9 auf. An der dem Erdreich zugewandten Seite ist eine Ausnehmung 7 vorgesehen, welche beim Einsatz des Steines zur Ausbildung einer Hangsicherungsmauer von dem begrenzenden Erdreich 12 ausgefüllt wird. Durch die Ausnehmung 7 wird weiterhin vorteilhaft erreicht, dass der Stein durch das Erdreich zusätzlich fixiert wird.

An der dem Erdreich 12 abgewandten Seite des Hangsicherungssteines 6 sind gemäss Fig. 2.2 Lamellen 2 zur Schallabsorption angeordnet. Damit wird dem Stein zusätzlich funktional eine höhere Schallabsorption zu eigen, was ihn bevorzugt für Hangsicherungsmauern entlang von Autobahnen oder Fahrstrassen einsetzbar macht.

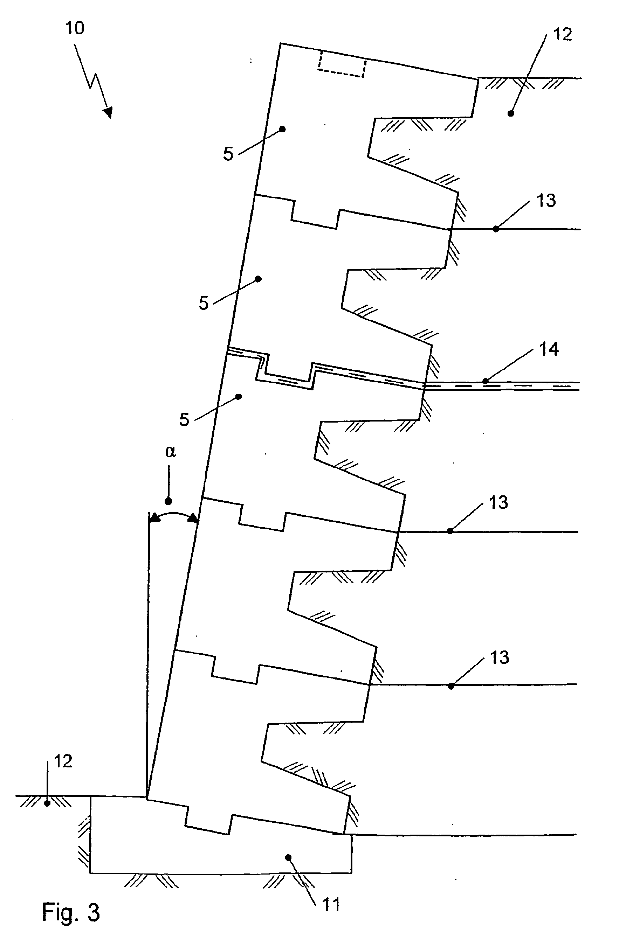

In Fig. 3 ist eine Hangsicherungswand 10 aus Hangsicherungssteinen 5 schematisch dargestellt. Die Hangsicherungssteine 5 werden dabei durch formschlüssiges Zusammenfügen der Zapfen 8 in die korrespondierenden Nuten 9 aufgebaut. Nach einer Ausgestaltung der Erfindung ist die Hangsicherungswand 10 vom Lot um einen Winkel α von ca. 10 Grad in Hangrichtung geneigt. Weiterhin ist ein Fundament 11 vorgesehen, welches im Wesentlichen die vertikalen Kräfte aus der Hangsicherungswand 10 aufnimmt.

Zwischen den Schichten des Erdreiches werden Geo-Flies-Matten 13 horizontal angeordnet. In Abständen sind als Zugbänder 14 ausgebildete Geo-Flies-Matten zur Aufnahme der horizontalen Kräfte aus der Hangsicherungswand vorgesehen.

Weiterhin sind nach einer bevorzugten Ausgestaltung der Erfindung Bauelemente mit dem erfindungsgemässen Baustoff herstellbar, welche sogar als Deckenelemente einsetzbar sind. Dazu findet eine Bewehrung der Deckenelemente mit Hanftragseilen statt, wobei die Tragseile einen Durchmesser von 12 mm oder mehr besitzen. Je nach den statischen Erfordernissen werden die Abstände der Tragseile und die Anordnung der Verteiler (s. u.) gewählt. Nach einer Ausführung der Erfindung für Deckenelemente werden die Tragseile im Abstand von 10 cm parallel im Deckenelement angeordnet. Weiterhin befinden sich Hanfseile mit einem Durchmesser von 8 mm im Abstand von 30 cm als Verteiler im Deckenelement.

Auf diese Art können Bauelemente mit einer Breite bis zu 2.5 m und einer Spannweite bis zu 5 m ausgeführt werden. Es ist statisch nachweisbar, dass der Einsatz der Hanfseile mit einem Durchmesser von 12 mm eine vergleichbare Wirkung wie der Einsatz von Stahl zur Bewehrung mit einem Durchmesser von 6 mm besitzt (Vorspannung).

Der erfindungsgemässe Baustoff ist also sehr vielseitig verwend- und verarbeitbar. Nach einer weiteren Ausgestaltung der Erfindung wird ein Baustoff mit hoher Porigkeit als Ausfüllstoff für ein Holzfachwerk verwendet. Das Holzfachwerk erfüllt dabei die statische Funktion des Bauelementes, wobei der Baustoff auf pflanzlicher Basis hervorragende Wärmedämm- und Schallschutzeigenschaften aufweist. Die Rezeptur eines Leichtbetons für Wandelemente mit Dämm- und Füllstofffunktion ist wie folgt angegeben:

Bezogen auf 1 m³ erfindungsgemässen Baustoff werden miteinander direkt vermischt:
60 % Miscanthushäcksel,
20 % Nadelholzspäne
20 % Hanfschäben- + fasern
240 kg Mischung M1
210 1 Wasser

Weiterhin ist aus dem Baustoff beispielsweise ein Hohlblockmauerstein pressbar, der konventionell verarbeitet werden kann. Ein solcher Mauerstein besitzt eine Breite von 30 cm, eine Höhe von 24 cm und eine Länge von 36.5 cm. Das Volumen des Mauersteins beträgt 26.28 dm³, die Hohlräume machen mit 7.04 dm³ einen Anteil von 27% aus. Sein Gewicht beträgt 15.50 kg. Eine erfindungsgemässe Zusammensetzung der pflanzlichen Rohstoffe für den Baustoff ist 75% Miscanthusspäne und 20% Nadelholzspäne mit einem Hanffaseranteil von 5% entsprechend der gewünschten statischen Festigkeit.

Wie oben angedeutet kann von genannter Universalgrundmischung ausgehend das Verfahren zur Herstellung spezifischer Baustoffe erweitert werden, indem dieser Mischung (oder, in Anbetracht der vorhandenen Anlagen, der Mischung M1 oder M2) eine weitere, aus anwendungsbedingten Stoffen bestehende, Mischung M3 in anwendungsbedingten Proportionen beigemischt wird.

Zur Herstellung z. B. von vorgefertigten Schnellbauplatten besteht diese Mischung M3 aus Gips, dem vorteilhaft eine Stärke hinzugefügt wird. Die - nach herkömmlichen Massen (z. B. Länge: 2500 mm, Breite: 1250 mm, Dicke: 13 mm) zugeschnittenen Platten sind beidseitig mit aus Altpapier hergestelltem Spezialpapier beschichtet und malerfertig. Zwischen den Papierfolien wird der den Kern bildende Baustoff aufgetragen. Dieser Baustoff setzt sich vorteilhaft nach folgenden Angaben zusammen:
- PB = 1 m³, Zerkleinerung 0 bis 2 mm, vorzugsweise eine Mischung aus Miscanthus (85 % Volumanteile, d. h. 85 kg (spezifisches Gewicht 100 kg/m³)) und Nadelholz (15 % Volumanteile, d. h. 16.5 kg (spezifisches Gewicht 110 kg/m³));
- M1 = 160 kg, wovon 60 kg Mineralisator gemäss M2 und 100 kg Portlandzement (Gewichtsanteile 37.50 % zu 62.50 %);
- M2 = besteht aus 42 kg Kalziumkarbonat und 18 kg Magnesiumkarbonat (Gewichtsanteile 70 % zu 30 %);
- M3 Gips = 200 kg;
- Anmachwasser = ca. 300 kg, verbleibender Rest = ca. 15 %, entspricht ca. 45 kg.

Es ergibt sich somit ein spezifisches Gewicht von ca. 506 kg. Dies bedeutet - verglichen mit den herkömmlichen Gipsplatten, die ein spezifisches Gewicht von ca 650 kg/m³ aufweisen - eine signifikante Gewichtsabsenkung von über 22 %, was sich insbesondere auf die Logistik als grossen Vorteil auswirkt.

Ein weiteres Beispiel einer Mischung M3 bildet ein herkömmliches Fliessmittel, wie zum Beispiel Ligninsulfonate, Polycarboxylate, Naphtalinsulfonat oder Napthalinacrylat. Es hat sich in der Tat überraschenderweise herausgezeigt, dass auf diese Weise extrudierte Bauelemente herstellbar sind.

Dabei wird der Baustoff bevorzugt nach der Zugabe von Fliessmitteln extrudiert. Die sich ergebenden Profile weisen im Vergleich zu den herkömmlichen PVC-Stäben (zur Herstellung u.a. von Fensterprofilen) eine höhere Zugfestigkeit und Biegesteifigkeit auf.

Ein besonders zugfestes strangförmiges Bauelement aus dem so hergestellten Baustoff ist durch die Verwendung von 10 Volumenprozenten Hanf- oder Miscanthusfasern (oder eine Mischung dieser Faser) als Bestandteil des pflanzlichen Rohstoffes erzeugbar. Diese Fasern sind ausgezeichnet in die Baustoffmatrix integriert und bewirken durch ihre Faserstruktur hervorragende Biege- und Zugfestigkeiten.

Wie die aus dem Stand der Technik bekannten Baustoffe auf pflanzlicher Basis sind die hier beschriebenen und beanspruchten Baustoffe atmungsfähig, recyklierbar, ressourcenschonend und ökologisch und weisen keine Giftstoffe auf. Letztere Baustoffe unterscheiden sich jedoch von diesen bekannten und a fortiori von den herkömmlichen Baustoffen dadurch, dass sie ein leichteres Volumengewicht aufweisen, bessere chemische, physikalische und mechanische Eigenschaften besitzen und kostengünsiger herstellbar sind. Nicht zuletzt ist zu bemerken, dass die erfindungsgemässen Baustoffe eine quasi unauschöpfbare breite Palette von Anwendungen und Einsatzmöglichkeiten abdecken.

## Patentansprüche

1. Baustoff auf pflanzlicher Basis (PB), der eine Mischung M1 aus einem Bindemittel und einem Mineralisator umfasst, **dadurch gekennzeichnet, dass** die Gewichtsanteile der die Mischung M1 bildenden Komponenten zwischen 50 % und 90 % für das Bindemittel und zwischen 10 % und 50 % für den Mineralisator liegen, und dass letzterer aus einer Mischung M2 von Kalziumkarbonat CaCO₃ und Magnesiumkarbonat MgCO₃ besteht, wobei die Gewichtsanteile der diese Mischung M2 bildenden Komponenten zwischen 60 % und 95 % für das CaCO₃ und zwischen 5 % und 40 % für das MgCO₃ liegen.

2. Baustoff gemäss Anspruch 1, **dadurch gekennzeichnet, dass** die Gewichtsanteile der die Mischung M1 bildenden Komponenten vorzugsweise zwischen 6/10 - 4/5 für das Bindemittel und zwischen 1/5 - 4/10 für den Mineralisator liegen.

3. Baustoff gemäss Anspruch 1 oder 2, **dadurch gekennzeichnet, dass** die Gewichtsanteile der die Mischung M2 bildenden Komponenten vorzugsweise zwischen 2/3 - 9/10 für das CaCO₃ und zwischen 1/10 - 1/3 für das MgCO₃ liegen.

4. Baustoff gemäss einem der Ansprüche 1 bis 3, **dadurch gekennzeichnet, dass** auf 1 m³ PB die Mischung M1 aus 75 kg Mineralisator M2 und 225 kg Bindemittel (Gewichtsanteile 25 % zu 75 %) und die Mischung M2 aus 60 kg Kalziumkarbonat und 15 kg Magnesiumkarbonat (Gewichtsant. 80 % zu 20 %) besteht.

5. Baustoff gemäss einem der Ansprüche 1 bis 4, **dadurch gekennzeichnet, dass** er eine weitere, in definierten anwendungsorientierten bzw. -abhängigen Proportionen vorkommenden Mischung M3 aufweist.

6. Baustoff gemäss Anspruch 5, **dadurch gekennzeichnet, dass** die Mischung M3 aus Gips besteht, der bevorzugt einen Stärkezusatz beinhaltet.

7. Baustoff gemäss Anspruch 5, **dadurch gekennzeichnet, dass** die Mischung M3 aus einem Fliessmittel besteht.

8. Baustoff gemäss Anspruch 5 oder 6, **dadurch gekennzeichnet, dass** auf 1 m³ PB die Mischung M1 aus 60 kg Mineralisator gemäss M2 und 100 kg Bindemittel (Gewichtsanteile 37.50 % zu 62.50 %), und die Mischung M₂ aus 42 kg Kalziumkarbonat und 18 kg Magnesiumkarbonat (Gewichtsanteile 70 % zu 30 %) und die Mischung M3 bevorzugt aus 200 kg Gips besteht.

9. Baustoff gemäss einem der Ansprüche 1 bis 8, **dadurch gekennzeichnet, dass** die pflanzliche Basis PB vorteilhaft aus Miscanthus (Chinaschilf), Hanf, Nadelholz, Zuckerrohr, Stroh, switchgras (panicum virgatum), italienischem Raigras, Riedschilf, einzeln oder in verschiedenen Kombinationen miteinander, besteht, wobei diese pflanzlichen Rohstoffe gemäss vorbestimmter Angaben zerkleinert werden.

10. Baustoff gemäss Anspruche 9, **dadurch gekennzeichnet, dass** die Zerkleinerung zu längstförmigen Teilchen wie Fasern bis 40 mmm und / oder zu Granulat mit einer Körnung bis 8 mm erfolgt.

11. Baustoff gemäss Anspruch 9 oder 10, **dadurch gekennzeichnet, dass** die pflanzliche Basis PB eine Mischung aus Miscanthus und Nadelholz aufweist, vorzugsweise mit respektive 85 % und 15 % Gewichtsanteile.

12. Baustoff gemäss Anspruch 9 oder 10, **dadurch gekennzeichnet, dass** die pflanzliche Basis PB eine Mischung aus Miscanthus, Nadelholz und Hanf, vorzugswweise mit respektive 75 %, 20 % und 5 % Gewichtsanteile.

13. Baustoff gemäss einem der Ansprüche 1 bis 12, **dadurch gekennzeichnet, dass** die Mischung {PB + M1} bzw. {PB + M1 + M3} mit einer Menge Anmachwasser angemacht wird, so dass eine vordefinierte angestrebte Konsistenz Kᵢ erreicht wird.

14. Baustoff gemäss Anspruch 13, **dadurch gekennzeichnet, dass** auf 1 m³ PB die Menge des Anmachwassers 300 Liter beträgt.

15. Baustoff gemäss Anspruch 13 oder 14, **dadurch gekennzeichnet, dass** genanntem Anmachwasser ein Fungizid-Präparat beigefügt wird, vorzüglich durch Zugabe von 2/3 Liter Natronlauge pro 1'000 Liter Anmachwasser.

16. Baustoff gemäss einem der Ansprüche 1 bis 15, **dadurch gekennzeichnet, dass** das Bindemittel vorzugsweise Portlandzement der Güte 52.5 ist.

17. Verfahren zum Herstellen eines Baustoffes gemäss einem der Ansprüche 1 bis 16, **dadurch gekennzeichnet, dass**
- die aus Kalziumkarbonat CaCO₃ und Magnesiumkarbonat MgCO₃ bestehende Mineralisator Mischung M2 in definierten anwendungsorientierten bzw. -abhängigen Proportionen angefertigt wird, - gegebenenfalls eine aus weingstens einem weiteren Stoff bestehende Mischung M3 in definierten anwendungsorientierten bzw. -abhängigen Proportionen angefertigt und der Mischung M2 beigemischt wird,
- die Mischung {M2} bzw. {M2 + M3} dem Bindemittel in definierten anwendungsorientierten bzw. -abhängigen Proportionen beigemischt wird, und die so gewonnene Mischung {M1} (={Bindemittel + M2}) bzw. {M1 + M3} der pflanzlichen Basis (PB) beigemischt wird, und dass
- die Mischung {PB + M1} bzw. {PB + M1 + M3} in eine je nach angestrebte Konsistenz Kᵢ definierte Menge Anmachwasser eingerührt wird.

18. Verfahren zum Herstellen eines Baustoffes gemäss einem der Ansprüche 5 bis 16, **dadurch gekennzeichnet, dass**
- die aus Kalziumkarbonat CaCO₃ und Magnesiumkarbonat MgCO₃ bestehende Mineralisator - Mischung M2 in definierten anwendungsorientierten bzw. -abhängigen Proportionen angefertigt wird, - die aus weingstens einem weiteren Stoff bestehende Mischung M3 in definierten anwendungsorientierten bzw. - abhängigen Proportionen angefertigt und der Mischung M2 beigemischt wird,
- die Mischung {M2 + M3} dem Bindemittel in definierten anwendungsorientierten bzw. -abhängigen Proportionen beigemischt wird und die so gewonnene Mischung {Bindemittel + M2 + M3} bzw. {M1 + M3} der pflanzlichen Basis (PB) beigemischt wird, und dass
- die Mischung {PB + M1 + M3} extrudiert wird.

19. Verfahren gemäss Anspruch 17 oder 18, **dadurch gekennzeichnet, dass** die Herstellung der Mischung {PB + M1} bzw. {PB + M1 + M3} in nachernunder, erfolgenden Arbeitsgängen erfolgt, wobei der Mineralisator bzw. der Mineralisator und die Mischung M3 im Bindemittelwerk direkt nach festgelegten Angaben dem Bindemittel vorher zugemischt wird.

20. Bauelement oder Gegenstand, der aus einem Baustoff gemäss einem der Ansprüche 1 bis 16 hergestellt ist.

21. Bauelement nach Anspruch 20, **dadurch gekennzeichnet, dass** es ein schalldämmendes Element (1) bildet und zur Schalldämmung Lamellen (2) zur Vergrösserung der schallabsorbierenden Fläche aufweist.

22. Schalldämmendes Bauelement nach Anspruch 21, **dadurch gekennzeichnet, dass** es die Form einer Platte hat.

23. Schalldämmendes Bauelement nach Anspruch 21 oder 22, **dadurch gekennzeichnet, dass** es aus zwei Schichten aufgebaut ist, wobei eine Tragschicht (3) mit vorwiegend statischer Funktion mit einer Absorberschicht (4) zur Schallabsorption vorgesehen ist.

24. Schalldämmendes Bauelement nach Anspruch 23, **dadurch gekennzeichnet, dass** es eine Dicke (h) von 25 cm aufweist, wobei die Tragschicht (3) mit einer Dichte von 1250 kg/m³ eine Dicke (g) von 10 cm aufweist und die Absorberschicht (4) mit einer Dichte von 500 kg/m³ aus Lamellen (2) mit einer Höhe (e) von 10 cm, einer Breite (d) von 10 cm am Lamellenfuss, einer Breite (a) von 6 cm am Lamellenkopf und einem Abstand (c) zwischen den Lamellen von 3 cm am Lamellenfuss und einer Schicht unter den Lamellen mit der Dicke (f) von 5 cm aufgebaut ist, und dass das Gesamtgewicht des Bauelements (1), bezogen auf die projizierte Fläche, 205 kg/m² beträgt.

25. Bauelement nach Anspruch 20, **dadurch gekennzeichnet, dass** es einen quaderförmigen Hangsicherungsstein (5) bildet, dass zur formschlüssigen Aneinanderfügung mehrerer Hangsicherungssteine (5) ein Zapfen (8) und eine Nut (9) ausgebildet sind und dass weiterhin an der dem Erdreich zugewandten Seite eine Ausnehmung (7) vorgesehen ist, welche durch Erdreich (12) ausfüllbar ist.

26. Hangsicherungsstein nach Anspruch 25, **dadurch gekennzeichnet, dass** an der dem Erdreich (12) abgewandten Seite des Hangsicherungssteines (6) Lamellen (2) zur Schallabsorption angeordnet sind.

27. Hangsicherungswand aus Hangsicherungssteinen nach Anspruch 25 oder 26, **dadurch gekennzeichnet, dass** mehrere Hangsicherungssteine (5, 6) durch formschlüssiges Zusammenfügen eine Hangsicherungswand (10) bilden, und dass diese vom Lot um den Winkel α in Hangrichtung geneigt ist und dass ein Fundament (11) zur Aufnahme der vertikalen Kräfte sowie Geo-Flies-Matten (13) und Zugbänder (14) zur Aufnahme der horizontalen Kräfte aus der Hangsicherungswand (10) vorgesehen sind.

28. Hangsicherungswand nach Anspruch 27, **dadurch gekennzeichnet, dass** der Winkel α 10° beträgt.

29. Bauelement gemäss Anspruch 20, **dadurch gekennzeichnet, dass** es zu einem Hohlraummauerstein gepresst wird.

30. Bauelement gemäss Anspruch 20, **dadurch gekennzeichnet, dass** Hanfseile mit einem Durchmesser von 12 mm als Bewehrung in einem Abstand von 10 cm angeordnet sind, dass Hanfseile mit einem Durchmesser von 8 mm als Verteiler im Abstand von 30 cm vorgesehen sind und dass die Bauelemente eine Länge von 3.5 m aufweisen und als Deckenelemente einsetzbar sind.

31. Bauelement gemäss Anspruch 20, **dadurch gekennzeichnet, dass** ein Holzfachwerk vorgesehen ist, welches die statische Funktion des Bauelementes erfüllt, und dass der Baustoff auf pflanzlicher Basis flächig das Holzfachwerk ausfüllt und eine Wärmedämm- und Schallschutzfunktion erfüllt.

## Claims

1. Construction material on a plant basis (PB), containing a mixture M1 of a binder and a mineraliser, **characterized in that** the weight proportions of the components constituting the mixture M1 are comprised between 50 % and 90 % for the binder and between 10 % and 50 % for the mineraliser, and **in that** the latter is composed of a mixture M2 of calcium carbonate CaCO₃ and magnesium carbonate MgCO₃, the weight proportions of the components constituting this mixture M2 being comprised between 60 % and 95 % for the CaCO₃ and between 5 % and 40 % for the MgCO₃.

2. Construction material according to claim 1, **characterised in that** the weight proportions of the components constituting the mixture M1 are preferably comprised between 6/10 and 4/5 for the binder and between 1/5 and 4/10 for the mineraliser.

3. Construction material according to claim 1 or 2, **characterised in that** the weight proportions of the components constituting the mixture M2 are preferably comprised between 2/3 and 9/10 for the CaCO₃ and between 1/10 and 1/3 for the MgCO₃.

4. Construction material according to one of claims 1 to 3, **characterised in that** for 1 m³ of PB, the mixture M1 is composed of 75 kg of mineraliser M2 and of 225 kg of binder (weight proportions 25 % to 75 %) and the mixture M2 of 60 kg of calcium carbonate and of 15 kg of magnesium carbonate (weight proportions 80 % to 20 %).

5. Construction material according to one of claims 1 to 4, **characterised in that** it contains an additional mixture M3 provided in defined application-oriented resp. -dependent proportions.

6. Construction material according to claim 5, **characterised in that** the mixture M3 consists of gypsum, preferably with starch added.

7. Construction material according to claim 5, **characterised in that** the mixture M3 consists of a flow agent.

8. Construction material according to claim 5 or 6, **characterised in that** for 1 m³ of PB, the mixture M1 is composed of 60 kg of mineraliser according to M2 and of 100 kg of binder (weight proportions 37.50 % to 62.50 %) and the mixture M2 of 42 kg of calcium carbonate and of 18 kg of magnesium carbonate (weight proportions 70 % to 30 %) and the mixture M3 preferably consists of 200 kg of gypsum.

9. Construction material according to one of claims 1 to 8, **characterised in that** the plant basis PB is advantageously composed of miscantus (China reed), hemp, softwood, sugar cane, straw, switchgrass (panicum virgatum), italian ryegrass, reed, individually or in different combinations, these vegetable raw materials being comminuted according to predetermined specifications.

10. Construction material according to claim 9, **characterised in that** the comminution produces elongate particles such as fibres up to 40 mm and/or a granulate of a grain size up to 8 mm.

11. Construction material according to claim 9 or 10, **characterised in that** the plant basis PB comprises a mixture of miscantus and softwood, preferably with respective weight proportions of 85 % and 15 %.

12. Construction material according to claim 9 or 10, **characterised in that** the plant basis PB comprises a mixture of miscantus, softwood, and hemp, preferably with respective weight proportions of 75 %, 20 %, and 5 %.

13. Construction material according to one of claims 1 to 12, **characterised in that** the mixture {PB + M1} resp. {PB + M1 + M3} is mixed with such a quantity of mixing water that a predefined, intended consistency Kᵢ is obtained.

14. Construction material according to claim 13, **characterised in that** for 1 m³ of PB, the quantity of mixing water is equal to 300 litres.

15. Construction material according to claim 13 or 14, **characterised in that** a fungicidal preparation is admixed to the mixing water, preferably by the addition of 2/3 litre of sodium hydroxide for 1 000 litres of mixing water.

16. Construction material according to one of claims 1 to 15, **characterised in that** the binder is preferably Portland cement of strength class 52.5.

17. Method for producing a construction material according to one of claims 1 to 16, **characterised in that**
- the mineraliser mixture M2 composed of calcium carbonate CaCO₃ and magnesium carbonate MgCO₃ is prepared according to defined application-oriented resp. -dependent proportions,
- as the case may be, a mixture M3 consisting of at least another material is prepared in defined application-oriented resp. -dependent proportions and admixed to the mixture M2, and **in that**
- the mixture {M2} resp. {M2 + M3} is admixed to the binder in defined application-oriented resp. -dependent proportions and the mixture {M1} (= {binder + M2} resp. {M1 + M3} thus obtained is admixed to the plant basis (PB), and **in that**
- the mixture {PB + M1} resp. {PB + M1 + M3} is mixed into a quantity of mixing water that is defined according to the desired consistency Kᵢ.

18. Method for producing a construction material according to one of claims 5 to 16, **characterised in that**
- the mineraliser mixture M2 composed of calcium carbonate CaCO₃ and magnesium carbonate MgCO₃ is prepared according to defined application-oriented resp. -dependent proportions,
- the mixture M3 consisting of at least another material is prepared in defined application-oriented resp. -dependent proportions and admixed to the mixture M2,
- the mixture {M2 + M3} is admixed to the binder in defined application-oriented resp. -dependent proportions and the mixture {binder + M2 + M3} resp. {M1 + M3} thus obtained is admixed to the plant basis (PB), and **in that**
- the mixture {PB + M1 + M3} is extruded.

19. Method according to claim 17 or 18, **characterized in that** the preparation of the mixture {PB + M1} resp. {PB + M1 + M3} takes place in successive operations, the mineraliser resp. the mineraliser and the mixture M3 being previously admixed to the binder directly in the binder plant according to determined specifications.

20. Structural element or object made of a construction material according to any one of claims 1 to 16.

21. Structural element according to claim 20, **characterised in that** it forms a sound-insulating element (1) and is provided with sound-insulating fins (2) for increasing the sound-absorbing surface area.

22. Sound-insulating structural element according to claim 21, **characterised in that** it is in the form of a panel.

23. Sound-insulating structural element according to claim 21 or 22, **characterised in that** it is built up of two layers, a supporting layer (3) with a preponderantly static function being provided with an absorber layer (4) for sound absorption.

24. Sound-insulating structural element according to claim 23, **characterised in that** it has a thickness (h) of 25 cm, the supporting layer (3) with a density of 1250 kg/m³ having a thickness (g) of 10 cm and the absorber layer (4) with a density of 500 kg/m³ being built up of fins (2) having a height (e) of 10 cm, a width (d) of 10 cm at the fin base, a width (a) of 6 cm at the fin head and a distance (c) between the fins of 3 cm at the fin base, and of a layer beneath the fins of a thickness (f) of 5 cm, and **in that** the total weight of the structural element (1), related to the projected surface area, is 205 kg/m².

25. Structural element according to claim 20, **characterised in that** it forms a cuboidal slope reinforcement block (5), **in that** a tenon (8) and a mortise (9) are provided for the form-fitting juxtaposition of several slope reinforcement blocks (5), and **in that** a recess (7) is furthermore provided on the side facing the soil and capable of being filled up with earth (12).

26. Slope reinforcement block according to claim 25, **characterised in that** sound-absorbing fins (2) are provided on the side of the slope reinforcement block (6) opposite the soil (12).

27. Slope reinforcement wall composed of slope reinforcement blocks according to claim 25 or 26, **characterised in that** several slope reinforcement blocks (5, 6) form a slope reinforcement wall (10) by form-fitting interconnection thereof, and **in that** the latter is inclined by the angle α with respect to the perpendicular, and **in that** a foundation (11) for absorbing the vertical forces as well as geo fleece mats (13) and tension bands (14) for absorbing the horizontal forces from the slope reinforcement wall (10) are provided.

28. Slope reinforcement wall according to claim 27, **characterised in that** the angle α is equal to 10°.

29. Structural element according to claim 20, **characterised in that** it is pressed into a hollow building brick.

30. Structural element according to claim 20, **characterised in that** hemp ropes of a diameter of 12 mm are arranged as a reinforcement at intervals of 10 cm, **in that** hemp ropes of a diameter of 8 mm are provided as distributors at intervals of 30 cm, and **in that** the structural elements have a length of 3.5 m and are applicable as ceiling elements.

31. Structural element according to claim 20, **characterised in that** a timber framing is provided which fulfills the static function of the structural element, and **in that** the plant-based construction material fills up the timber framing two-dimensionally and fulfills a thermal insulation and noise protection function.

## Revendications

1. Matériau de construction à base végétale (PB) comprenant un mélange M1 d'un liant et d'un minéralisateur, **caractérisé en ce que** les proportions en poids des constituants formant le mélange M1 sont comprises entre 50 % et 90 % pour le liant et entre 10 % et 50 % pour le minéralisateur, et que ce dernier est composé d'un mélange M2 de carbonate de calcium CaCO₃ et de carbonate de magnésium MgCO₃, les proportions en poids des constituants formant ce mélange M2 étant comprises entre 60 % et 95 % pour le CaCO₃ et entre 5 % et 40 % pour le MgCO₃.

2. Matériau de construction selon la revendication 1, **caractérisé en ce que** les proportions en poids des constituants formant le mélange M1 sont préférablement comprises entre 6/10 et 4/5 pour le liant et entre 1/5 et 4/10 pour le minéralisateur.

3. Matériau de construction selon la revendication 1 ou 2, **caractérisé en ce que** les proportions en poids des constituants formant le mélange M2 sont préférablement comprises entre 2/3 et 9/10 pour le CaCO₃ et entre 1/10 et 1/3 pour le MgCO₃.

4. Matériau de construction selon l'une des revendications 1 à 3, **caractérisé en ce que** sur 1 m³ de PB, le mélange M1 est composé de 75 kg de minéralisateur M2 et de 225 kg de liant (proportions en poids 25 % à 75 %) et le mélange M2 de 60 kg de carbonate de calcium et de 15 kg de carbonate de magnésium (proportions en poids 80 à 20 %).

5. Matériau de construction selon l'une des revendications 1 à 4, **caractérisé en ce qu'**il comprend un mélange supplémentaire M3 contenu en proportions définies, orientées vers ou dépendantes de l'application.

6. Matériau de construction selon la revendication 5, **caractérisé en ce que** le mélange M3 est composé de plâtre, préférablement additionné d'amidon.

7. Matériau de construction selon la revendication 5, **caractérisé en ce que** le mélange M3 est constitué d'un agent d'écoulement.

8. Matériau de construction selon la revendication 5 ou 6, **caractérisé en ce que** sur 1 m³ de PB, le mélange M1 est composé de 60 kg de minéralisateur selon M2 et de 100 kg de liant (proportions en poids 37,50 % à 62,50 %) et le mélange M2 de 42 kg de carbonate de calcium et de 18 kg de carbonate de magnésium (proportions en poids 70 % à 30 %) et le mélange M3 préférablement de 200 kg de plâtre.

9. Matériau de construction selon l'une des revendications 1 à 8, **caractérisé en ce que** la base végétale PB est avantageusement constituée de Miscanthus (roseau de Chine), de chanvre, de bois de conifères, de canne à sucre, de paille, de panic raide (panicum virgatum), de lolium italien, de roseau, individuellement ou en différentes combinaisons, ces matières premières végétales étant fragmentées selon des spécifications prédéterminées.

10. Matériau de construction selon la revendication 9, **caractérisé en ce que** la fragmentation produit des particules allongées telles que des fibres jusqu'à 40 mm et/ou des granules d'une taille jusqu'à 8 mm.

11. Matériau de construction selon la revendication 9 ou 10, **caractérisé en ce que** la base végétale PB comprend un mélange de Miscanthus et de bois de conifères, préférablement à des proportions en poids de 85 % et 15 %, respectivement.

12. Matériau de construction selon la revendication 9 ou 10, **caractérisé en ce que** la base végétale PB comprend un mélange de Miscanthus, de bois de conifères et de chanvre, préférablement à des proportions en poids de 75 %, 20 % et 5 %, respectivement.

13. Matériau de construction selon l'une des revendications 1 à 12, **caractérisé en ce que** le mélange {PB + M1} respectivement {PB + M1 + M3} est gâché avec une quantité d'eau à gâcher telle qu'une consistance Kᵢ prédéfinie et souhaitée est obtenue.

14. Matériau de construction selon la revendication 13, **caractérisé en ce que** sur 1 m³ de PB, la quantité d'eau à gâcher est égale à 300 litres.

15. Matériau de construction selon la revendication 13 ou 14, **caractérisé en ce qu'**une préparation fongicide est ajoutée à ladite eau à gâcher, préférablement par addition de 2/3 de litre d'hydroxide de sodium sur 1000 litres d'eau à gâcher.

16. Matériau de construction selon l'une des revendications 1 à 15, **caractérisé en ce que** le liant est préférablement du ciment Portland de la qualité 52.5.

17. Procédé pour fabriquer un matériau de construction selon l'une des revendications 1 à 16, **caractérisé en ce que**
- le mélange minéralisateur M2 composé de carbonate de calcium CaCO₃ et de carbonate de magnésium MgCO₃ est préparé en proportions définies, orientées vers ou dépendantes de l'application,
- le cas échéant, un mélange M3 composé d'au moins une matière additionnelle est préparé en proportions définies, orientées vers ou dépendantes de l'application et ajouté au mélange M2,
- le mélange {M2} respectivement {M2 + M3} est ajouté au liant en proportions définies, orientées vers ou dépendantes de l'application, et le mélange ainsi obtenu {M1} (={liant + M2}) respectivement {M1 + M3} est ajouté à la base végétale (PB), et que
- le mélange {PB + M1} respectivement {PB + M1 + M3} est délayé dans une quantité d'eau à gâcher définie selon la consistance Kᵢ souhaitée.

18. Procédé pour fabriquer un matériau de construction selon l'une des revendications 5 à 16, **caractérisé en ce que**
- le mélange minéralisateur M2 composé de carbonate de calcium CaCO₃ et de carbonate de magnésium MgCO₃ est préparé en proportions définies, orientées vers ou dépendantes de l'application,
- le mélange M3 composé d'au moins une matière additionnelle est préparé en proportions définies, orientées vers ou dépendantes de l'application et ajouté au mélange M2,
- le mélange {M2 + M3} est ajouté au liant en proportions définies, orientées vers ou dépendantes de l'application, et le mélange ainsi obtenu {liant + M2 + M3} respectivement {M1 + M3} est ajouté à la base végétale (PB), et que
- le mélange {PB + M1 + M3} est extrudé.

19. Procédé selon la revendication 17 ou 18, **caractérisé en ce que** la préparation du mélange {PB + M1} respectivement {PB + M1 + M3} est réalisée par opérations successives, le minéralisateur respectivement le minéralisateur et le mélange M3 étant préalablement ajoutés au liant directement à l'usine de liant d'après des spécifications déterminées.

20. Elément de construction ou objet fabriqué à partir d'un matériau de construction selon l'une des revendications 1 à 16.

21. Elément de construction selon la revendication 20, **caractérisé en ce qu'**il forme un élément (1) d'isolation acoustique et comporte pour l'isolation acoustique des lamelles (2) afin d'augmenter la surface d'absorption acoustique.

22. Elément de construction acoustiquement isolant selon la revendication 21, **caractérisé en ce qu'**il présente la forme d'une panneau.

23. Elément de construction acoustiquement isolant selon la revendication 21 ou 22, **caractérisé en ce qu'**il est composé de deux couches, une couche de support (3) à fonction principalement statique étant pourvue d'une couche d'absorption (4) pour l'absorption acoustique.

24. Elément de construction acoustiquement isolant selon la revendication 23, **caractérisé en ce qu'**il a une épaisseur (h) de 25 cm, la couche de support (3) avec une densité de 1250 kg/m³ ayant une épaisseur (g) de 10 cm et la couche d'absorption (4) avec une densité de 500 kg/m³ étant constituée de lamelles (2) ayant une hauteur (e) de 10 cm, une largeur (d) de 10 cm au pied de la lamelle, une largeur (a) de 6 cm à la tête de la lamelle et un écart (c) entre les lamelles de 3 cm au pied des lamelles, et d'une couche sous les lamelles d'une épaisseur (f) de 5 cm, et que le poids total de l'élément de construction (1), par rapport à la surface projetée, est égal à 205 kg/m².

25. Elément de construction selon la revendication 20, **caractérisé en ce qu'**il forme un élément de talus (5) parallélépipédique, qu'un tenon (8) et une mortaise (9) sont formées pour l'aboutement géométrique de plusieurs éléments de talus (5) et qu'un évidement (7) est en outre prévu du côté en regard du sol, ledit évidement pouvant être rempli de terre (12).

26. Elément de talus selon la revendication 25, **caractérisé en ce que** des lamelles (2) d'absorption acoustique sont agencées du côté de l'élément de talus (6) opposé au sol (12).

27. Mur de consolidation de talus composé d'éléments de talus selon la revendication 25 ou 26, **caractérisé en ce que** plusieurs éléments de talus (5, 6) forment un mur de consolidation (10) par assemblage géométrique, et que celui-ci est incliné d'un angle α par rapport à la verticale et qu'une fondation (11) est prévue pour recevoir les forces verticales ainsi que des nattes (13) de géonontissé et des bandes de tension (14) pour recevoir les forces horizontales exercées par le mur de consolidation (10).

28. Mur de consolidation de talus selon la revendication 27, **caractérisé en ce que** l'angle α est égal à 10°.

29. Elément de construction selon la revendication 20, **caractérisé en ce qu'**il est compressé sous forme de parpaing.

30. Elément de construction selon la revendication 20, **caractérisé en ce que** des cordes de chanvre d'un diamètre de 12 mm sont disposées comme armature à des intervalles de 10 cm, que des cordes de chanvre d'un diamètre de 8 mm sont disposées comme distributeurs à des intervalles de 30 cm et que les éléments de construction ont une longueur de 3,5 m et sont utilisables comme éléments de plafond.

31. Elément de construction selon la revendication 20, **caractérisé en ce qu'**une charpente de bois est prévue qui remplit la fonction statique de l'élément de construction, et que le matériau de construction à base végétale remplit la charpente de bois de manière bidimensionnelle et remplit une fonction d'isolation thermique et acoustique.
